(19) Europäisches Patentamt / European Patent Office / Office européen des brevets

(11) **EP 2 226 374 B1**

(12) **EUROPEAN PATENT SPECIFICATION**

(45) Date of publication and mention
of the grant of the patent:
**16.05.2012 Bulletin 2012/20**

(51) Int Cl.:
***C09K 13/08*** *(2006.01)*

(21) Application number: **09290161.0**

(22) Date of filing: **06.03.2009**

(54) **Etching composition, in particular for silicon materials, method for characterizing defects of such materials and process of treating such surfaces with etching composition**

Ätzzusammensetzung, insbesondere für Siliciummaterialien, Verfahren zur Charakterisierung von Fehlern derartiger Materialien und Verfahren zur Behandlung derartiger Oberflächen mit der Ätzzusammensetzung

Composition de gravure, en particulier pour des matériaux en silicone, procédé de caractérisation des défauts de ces matériaux et procédé de traitement de telles surfaces avec la composition de gravure

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**08.09.2010 Bulletin 2010/36**

(73) Proprietor: **S.O.I. TEC Silicon**
**38190 Bernin (FR)**

(72) Inventors:
• **Maehliss, Jochen**
**63791 Karlstein (DE)**
• **Kolbesen, Bernd**
**61350 Bad Homburg (DE)**
• **Hakim, Romana**
**63303 Dreieich (DE)**
• **Brunier, Francois**
**38190 Bernin (FR)**

(74) Representative: **Grünecker, Kinkeldey, Stockmair & Schwanhäusser**
**Leopoldstrasse 4**
**80802 München (DE)**

(56) References cited:
WO-A-2008/080097     GB-A- 2 428 885
US-A- 4 089 213      US-A1- 2004 108 302
US-B1- 6 803 240

**Description**

The present invention relates to a method for characterizing defects on silicon surfaces, in particular silicon surfaces of silicon-on-insulator (SOI) or strained-silicon-on-insulator (sSOI) type wafers, a process for treating silicon surfaces with the etching solution, and the etching solution to be employed in the method and process of the present invention.

**Technological Background**

Crystal defects in substrates for microelectronic devices are highly undesirable as they have a negative impact on the functionality and reliability of integrated circuits, formed using the substrates, such as wafers, in particular silicon-on-insulator (SOI) type wafers. One particular type of defect is a so-called SECCO defect. In the past, these defects were not considered to be critical as the number was low enough for the typical SOI applications, e.g. logic circuits. However, with new applications coming up for SOI technology, e.g. memory devices, the substrates need to be provided with a SECCO defect level of less than 100 per $cm^2$, whereas, up to now, this value was about a factor five higher.

The typical approach for identifying crystal defects and thereby characterizing the quality of substrates is the use of so-called structural etching solutions. These etching solutions enable the delineation of crystal defects, which give rise to either hillocks or etch pits after application of the structural etching solution.

Various etching solutions have been proposed for silicon surfaces, which require typically the presence of strong oxidants.

F. Secco described in Journal of Electrochemical Society, vol. 119, no. 7, pp. 948-951 (1972) an etching solution for revealing defects in silicon, which become visible as etch pits on the surface, consisting of a mixture of hydrofluoric acid and aqueous solution of alkali dichromate. The alkali dichromate acts as oxidizing agent while the hydrofluoric acid dissolves the oxidation product, namely silicon dioxide. The current standard process of determining SECCO defects in SOI structures has been described in L.F.Giles, A.Nejim, P.L.F.Hemment, Vacuum 43, 297 (1992) or by the same authors in Materials Chemistry and Physics 35 (1993) 129-133. However, chromates and, in particular, dichromates, as used in the SECCO process, are highly toxic due to their ability to interact with cells and DNA.

W.C. Dash in the Journal of Applied Physics, vol. 27, no. 10, pp. 1193-1195 (1956) discloses a further etching solution, which is able to reveal defects in semiconductor substrates, consisting of hydrofluoric acid, nitric acid and acetic acid. While this solution is able to etch semiconductor substrates, including silicon substrates, the etching solution according to Dash is not able to differentiate between different types of defects and furthermore does not provide a satisfactory etch rate.

US 2,619,414 discloses a further chemical etchant to be applied on semiconductor surfaces to improve their electrical characteristics. The chemical etchant disclosed in US 2,619,414 comprises acetic acid, nitric acid, hydrofluoric acid and bromine. The drawback of the composition as disclosed in US 2,619,414 is the use of bromine. Elemental bromine is instable and must be stored in the dark as well as at low temperature. In addition, it is volatile and, therefore, structural etching according to this prior art reference can only be performed under ventilation, since bromine evaporates from the composition. Although bromine is not as toxic as chromate or dichromate, precautionary measures nevertheless have to be taken when using the chemical etchant according to US 2,619,414.

In addition, novel silicon containing materials have been developed and have found their field of application, requiring a further adaptation and adjustment of the chemicals used for treating silicon-containing surfaces. Representative examples of such novel silicon-containing materials are strained-silicon-on-insulator type wafers i.e. materials for which all known etching compositions are not suitable and furthermore materials which show novel types of defects which need to be revealed.

**Object of the present invention**

In view of the progress in semiconductor industry, involving in particular the decrease of the minimum feature sizes in the fabrication of integrated circuits, the introduction of new substrate materials, such as silicon-on-insulator (SOI) or strained-silicon-on-insulator (sSOI), requires improved methods for quality characterization, in particular with respect to the following features:

- Sufficient surface homogeneity and smoothness after etching.

- Satisfactory and constant etch rates, so that even thin substrates can be etched with a sufficient control of etch rate / etching time / removed surface material.

- Etching sensitivity, i.e. the possibility to detect different types of defects (such as D defects corresponding to agglomerates of vacancies and oxygen precipitates), most preferably identifying different types of defects after one type of etching treatment.

- Reproducibility of the etching process, which is essential for the industrial applicability.

- Reduction of health risks and environmental problems by using suitable components for the etching composition, without sacrificing the desired properties, etch rate, etching sensitivity etc.

- Stability of the etching composition, so that it can be stored for a certain period of time and can be handled without highly elaborated safety measures.

- Cheap and commercially available components that constitute the etching composition.

The object of the present invention is the provision of an etching composition, a method for characterizing defects revealed as etch features on surfaces of such materials and a process of treating such surfaces with the etching composition, and the use of the composition within such a method, which fulfill the above requirements.

**Brief description of the invention**

The above-outlined object has been solved with the etching solution as defined in claim 1. Preferred embodiments are defined in sub-claims 2 to 6. The present invention furthermore provides a method for characterizing defects revealed as etch features on silicon surfaces as defined in claim 6. Preferred embodiments thereof are defined in sub-claims 7 to 11. In addition, the present invention provides a process for etching silicon surfaces as defined in claim 12. Finally, the use of an etching composition of claims 1 to 6 within a method according to any of claims 7 to 11 is defined in claim 13.

Preferred embodiments for all aspects of the present invention are also explained in the following description.

**Brief description of the figures**

Figure 1: Schematic representation of the different reaction paths in a structural etching process for a microdefect site compared to the perfect lattice.

Figure 2: Light optical micrograph of an SOI surface etched with an etching composition in accordance with the present invention.

Figure 3: Scanning electron micrograph of an oxidation-induced stacking fault revealed with an etching composition in accordance with the present invention.

Figure 4: Light optical micrograph of an SOI surface etched with an etching composition of the prior art (SECCO composition).

Figure 5: Scanning electron micrograph of an oxidation-induced stacking fault revealed with an etching composition of the prior art (SECCO composition).

Figure 6: Correlation graph of revealed oxidation-induced stacking faults (OiSFs) in SOI samples with different OiSF densities (Samples 1-6) between etching compositions in accordance with the present invention (Example 1 and Example 6 according to Table 1) and an etching composition of the prior art (SECCO composition, Table 1).

**Detailed description of the present invention**

The present invention will be described in connection with the etching solution. The preferred embodiments as discussed below, however, also apply with respect to the method and process in accordance with the present invention.

The etching composition comprises an organic oxidant dissolved in a solvent, and a de-oxidant, wherein the de-oxidant comprises HF or $HBF_4$ or mixtures thereof.

The term "organic oxidant" is defined herein as any type organic substance having the ability to act as an electron acceptor within the etching composition, in particular, to oxidize silicon to e.g. silicon dioxide under given conditions. The term "de-oxidant" is defined as any type of substance having the ability to dissolve the formed silicon dioxide as silicon fluoride (e.g. as $SiF_4$, $SiF_6^{2-}$ or the like).

Specific embodiments of the components of the etching composition are explained in further detail below:

The organic oxidant is preferably a benzoquinone or a benzoquinone derivative, more preferably p-benzoquinone or a p-benzoquinone derivative, examples including 3,5-di-tert-butyl-o-benzoquinone, 2,5-di-tert-butyl-p-benzoquinone, 2,3-dicyano-5,6-dichloro-p-benzoquinone or 2,3,5,6-tetrachloro-p-benzoquinone (chloranil). The use of such an organic oxidant in combination with the de-oxidant within the etching composition ensures the desired etching properties, in particular a favorable etching sensitivity i.e. the possibility to detect different types of defects such as D defects corresponding to agglomerates of vacancies and oxygen precipitates, and most preferably identifying different types of defects after one type of etching treatment.

The solvent for dissolving the organic oxidant is preferably an organic solvent such as acetone, acetic acid, acetonitrile, benzonitrile, dimethylformamide, dimethylsulfoxide, dioxane, ethanol, formic acid, methyl acetate, N-methyl-2-pyrrolidone, propanoic acid, propanol, tetrahydrofurane, toluene or mixtures thereof. The type of solvent is to be chosen depending on its abilities to dissolve the organic oxidant within the etching solution and to mix with water as the de-oxidants HF and $HBF_4$ may be dissolved in aqueous solution. Preferred solvents for 2,3,5,6-tetrachloro-p-benzoquinone or other highly substituted benzoquinone derivatives are acetonitrile or dioxane, in particular acetonitrile.

Adjusting appropriately the ratio between solvent and aqueous de-oxidant avoids precipitation of the oxidant due to a too high amount of water within the solution. Further, the inventors found that the ratio between the organic solvent and aqueous de-oxidant has an influence on the homogeneity of the etched surface. Preferred ratios are described below.

Another kind of precipitation occurs when p-benzoquinone is used as oxidant. R.E. Moser and H.G. Cassidy described in Journal of the American Chemical Society, vol. 87, no. 15, pp. 3463-3467 (1965) a charge-transfer complex, a so-called quinhydrone complex, which is formed by benzoquinone and its reduced form hydroquinone. The formation of this quinhydrone complex is dependent on the solvent used, but when formed it starts to precipitate at the walls of the container after some time.

The particularly preferred benzoquinone derivatives 3,5-di-tert-butyl-o-benzoquinone, 2,5-di-tert-butyl-p-benzoquinone, 2,3-dicyano-5,6-dichloro-p-benzoquinone or 2,3,5,6-tetrachloro-p-benzoquinone contain bulky functional groups at the ring system. The sterical hindrance of these groups is deemed to prevent the precipitation due to a prevented formation of said quinhydrone complex.

The de-oxidant comprises HF or $HBF_4$ or mixtures thereof. Preferably $HBF_4$ is used due to the fact that $HBF_4$ does not show any toxicity. The de-oxidant may be used as pure compound or as such solutions in which the de-oxidant is dissolved in water or in diethyl ether. A solution in a non-aqueous solvent such as diethyl ether is preferred in cases in which a higher amount of oxidant can be dissolved in the etching solution than in a solution in an aqueous solvent. This may be important in order to increase the etch rate.

The oxidants in accordance with the present invention are substantially chromium-free. The use of toxic Cr(VI) is or will be restricted by law due to its significant toxicity. Thus, a strong need has arisen for the development of a chromium-free etching solution, which fulfills the etching characteristics like the state of the art compositions. The etching composition in accordance with the present invention succeeds to replace the oxidant Cr(VI) by an equivalent one.

The components of the etching solution in accordance with the present invention preferably may be present in the following concentrations / volumic ratios:

The concentration of the organic oxidant in the solvent is preferably 0.1 to 100 g/l, more preferably 1 to 30 g/l. Depending on the type of the organic oxidant and the solvent, this concentration range ensures that the organic oxidant remains dissolved for a longer period of time within an etching method or process, preferable more than 1 day, more preferable more than 10 days. If the concentration is too high, the oxidant may start to precipitate after some time. If the concentration is too low, the etch rate may not be sufficient.

The preferred volumic ratio of the solution of the organic oxidant to the de-oxidant is 1 : 0.01 to 1 : 2, more preferably 1 : 0.1 to 1 : 0.5 (solution of organic oxidant : de-oxidant). When the volumic ratio is within the above ranges, sufficient etch rates in combination with a sufficient etching homogeneity can be obtained.

In case, when the de-oxidant is dissolved in aqueous solution, e.g. an aqueous HF solution, the above defined volumic ratio ensures that the organic oxidant does not precipitate within the etching composition. If the volumic ratio of the solution of the organic oxidant to the aqueous solution of de-oxidant exceeds the value of 1 : 2, the total amount of water within the etching composition becomes too high, so that the organic oxidant may start to precipitate. On the other hand, if the volumic ratio of the solution of the organic oxidant to the aqueous solution of de-oxidant is below the value of 1 : 0.01, the etch rates may be insufficiently low. The volumic ratios within the claimed ranges enable sufficient etch rates in combination with sufficient etching homogeneity.

The etch rate is increased with an increased amount of de-oxidant. Preferred etch rates are from 0.2 to 75 nm/min, more preferred from 2 to 50 nm/min at room temperature (23 °C). If the etch rate is lower than 0.2 nm/min at 23 °C, the industrial applicability may be insufficient. If the etch rate is above 75 nm/min at 23 °C, the homogeneity and/or sensitivity may become insufficient. The above etch rates are furthermore sufficiently low in order to enable the treatment of surfaces of very thin films that are in the nanometer range.

A possibility to increase the etch rate is by increasing the etching temperature. Preferred temperatures are between 0 and 100 °C, preferably between 15 and 50 °C. Lower temperatures are unfavorable due to insufficiently low etch rates. Higher temperatures may result in a reduced etching homogeneity and/or sensitivity as well as in a significant increase of the volatility of the components used.

The etching can be performed by dipping a sample into the etching composition in accordance with the present invention. A preferred contact time for standard SOI samples is 5-120 s, more preferable 30-90 s.

The variability of the etch rate per time is a further important factor e.g. in order to achieve a sufficient etching homogeneity. The variability is defined herein as the difference in the etch rate on a particular etching composition on a surface per time. A sufficient etching variability in accordance with the present invention is +/- 0.5 nm/min per 24 hours or less. Preferably etching variability of the etching compositions should not exceed this value for at least 10 days.

The etching solution in accordance with the present invention may be prepared by simply mixing the components identified above in the desired ratio, typically using conventional safety measures. The order of addition of the components is not critical and the components usually are mixed within a stirred vessel. However, it is preferred that the organic oxidant is dissolved in the solvent before mixing with the de-oxidant. The composition as obtained may be stored without loss of etching activity for several days.

The use of an etching solution in accordance with the above is highly satisfying. The etching solution as defined above provides etch rates, which are low enough so that even thin semiconductor substrates can be etched, without sacrificing the desired etching properties, such as formation of well developed etch pits, facilitating the surface characterization.

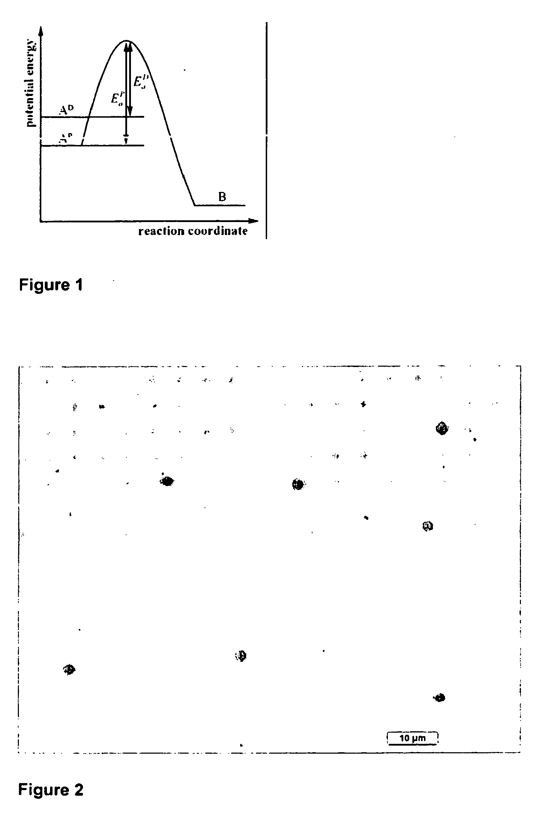

The etching composition can be used within a method, which is used in substrate engineering to delineate and characterize etch features of tiny surface or volume defects on silicon surfaces like wafers. The principle is to use a chemistry which is sensitive enough to differentiate between local levels of potential energy at microdefect sites ($A^D$) and the normal level of potential energy in the perfect silicon lattice ($A^P$). Thus, the activation energy of the microdefect site ($E_a^D$) is lower than the activation energy of the perfect silicon lattice ($E_a^P$) in order to obtain product (B) (see Figure 1). The etching process is a series of oxidation and de-oxidation reactions of the silicon surface with the oxidant / de-oxidant present in the etching composition. The selectivity of the etching composition is based on the ability to etch microdefect sites faster than the perfect silicon crystal.

The method in accordance with the present invention may preferably comprise the step of visually detecting the treated surface. However, any other detecting methods are also applicable.

The silicon surface is preferably an SOI or sSOI surface or a stressed Si surface. These substrates may be subjected to any conventional pretreatment, and after application of the etching composition in accordance with the present invention, the substrates again may be subjected to conventional post-treatments such as washing, drying etc. as required.

Furthermore, the etching composition can be used within a process comprising the step of treating silicon surfaces with said etching composition, for e.g. modifying the surface topography, without been bound to the step of characterizing any surface defects.

The present invention is further illustrated by the following examples:

Examples

Table 1

| Example | Oxidant | Solvent | Conc. [g/l] | De-oxidant | Volumic ratio (oxidant : solution : de-oxidant) | Etch rate at 23 °C [nm/mm] | Comments |
|---|---|---|---|---|---|---|---|
| SECCO | 0.6 g $K_2Cr_2O_7$ | 100 ml $H_2O$ 6.0 | | 50 ml HF (50 wt.% solution in $H_2O$) | 1 : 0.5 | 42.0 | prior art; $K_2Cr_2O_7$ is classified T+, N, O and IARC Group 1 (definitely carcinogenic to humans); HF is classified T+ |
| Ex. 1 | 2.0 g p-benzoquinone | 100 ml acetone | 20.0 | 50 ml HF (50 wt.% solution in $H_2O$) | 1 : 0.5 | 3.0 | benzoquinone is classified T, N; acetone is classified F, Xi; very uniform etch removal, defects are delineated clearly |
| Ex. 2 | 0.5 g 2,3,5,6-tetrachloro-p-benzoquinone | 100 ml dioxane | 5.0 | 20 ml HF (50 wt.% solution in $H_2O$) | 1 : 0.2 | 3.0 | tetrachloro-p-benzoquinone is classified Xi, N; dioxane is classified F, Xn and IARC Group 2B (possibly carcinogenic to humans) |
| Ex. 3 | 0.5 g 2,3,5,6-tetrachloro-p-benzoquinone | 120 ml dioxane | 4.2 | 30 ml HF (50 wt.% solution in $H_2O$) 1 : | 0.25 | 3.9 | very uniform etch removal, defects are delineated clearly |
| Ex. 4 | 0.5 g 2,3,5,6-tetrachloro-p-benzoquinone | 100 ml acetonitrile | 5.0 | 20 ml HF (50 wt. % solution in $H_2O$) | 1 : 0.2 | 16.3 | acetonitrile is classified F, Xn; high etch rate, very uniform etch removal, defects are delineated clearly |

(continued)

| Example | Oxidant | Solvent | Conc. [g/l] | De-oxidant | Volumic ratio (oxidant : solution : de-oxidant) | Etch rate at 23 °C [nm/mm] | Comments |
|---------|---------|---------|-------------|------------|------------------------------------------------|----------------------------|----------|
| Ex. 5 | 0.3 g 2,3,5,6-tetrachloro-pbenzoquinone | 100 ml acetonitrile | 3.0 | 10 ml HF (50 wt. % solution in $H_2O$) | 1 : 0.1 | 12.8 | high etch rate, very uniform etch removal, defects are delineated clearly, no precipitation after 10 days |
| Ex. 6 | 0.35 g 2,3,5,6-tetrachloro-p-benzoquinone | 100 ml acetonitrile | 3.5 | 25 ml $HBF_4$ (50 wt.% solution in $H_2O$) | 1 : 0.25 | 2.0 (at 40 °C) | $HBF_4$ is classified C; non-toxic etching solution (no HF), very uniform etch removal, defects are delineated clearly no precipitation after 10 days |
| Ex. 7 | 0.35 g 2,3,5,6-tetrachloro-p-benzoquinone | 100 ml acetonitrile | 3.5 | 25 ml $HBF_4$ (50 wt.% solution in diethyl ether) | 1 : 0.25 | 2.1 (at 40 °C) | diethyl ether is classified F+, Xn; non-toxic etching solution, very uniform etch removal, defects are delineated clearly, no precipitation after 10 days |

Table 1 shows an overview of preferred embodiments (Examples 1 to 7) of the etching composition according to the present invention, and a standard SECCO composition which was used as a reference.

The components used are commercial products which were obtained, e.g. from Alfa Aesar, Sigma-Aldrich and AppliChem. The etching compositions were prepared by dissolving the oxidant within the organic solvent and subsequently mixing the solution with the de-oxidant. The etching samples were commercially available SOI samples with a thickness of the Si layer within the range of 50 to 100 nm. For the etching experiments each SOI sample was dipped individually in the etching solution in accordance with Examples 1 to 7 at a temperature as indicated in Table 1. The solutions were not stirred during etching. The samples were then rinsed in ultra-clean Millipore water for two minutes, followed by a short dip in the organic solvent used in order to remove possible residues. Afterwards the samples were dipped for 60 s in HF (50 wt.% solution in $H_2O$) to dissolve the buried oxide (BOX) below the defect site, which is crucial for defect observation e.g. via optical microscopy or scanning electron microscopy. They were then rinsed again in Millipore water for two minutes. The etch rates and the etching homogeneities were calculated via ellipsometry using a PLASMOS SD 2002 ellipsometer in accordance with the method as described in I. Ohlidal and D. Franta, Ellipsometry of Thin Film Systems, Progress in Optics, vol. 41, ed. E. Wolf, Elsevier, Amsterdam, 2000, pp. 181-282. The etching homogeneity was within 1 % of the total layer thickness removed. The variability of the etching was determined by measuring the etch rates every 24 hours, and revealed that the variability of the etch rates of Examples 1 to 7 were less than 0.1 nm/min.

Examples 1 to 7 demonstrate that an etching composition in accordance with the present invention is suitable to replace the chromium containing SECCO etching composition (prior art). Further, Examples 2/3 and 4/5 illustrate that the etch rate can be enhanced with increased amounts of de-oxidant, although the maximum amount of oxidant which can be dissolved in the composition decreases with increased amount of aqueous de-oxidant. The adjustability of the etch rate via the solvent type is demonstrated by Examples 2/4 that show an increase when substituting dioxane with acetonitrile. The etching solution in accordance with the present invention, depending from the actual composition, provides for example etch rates of 0.2 to 50 nm/min, with the possibility to adjust etch rates as desired, for example from 2 to 50 nm/min, so that highly satisfying total etching times can be achieved even when using thin substrates, such as SOI or sSOI substrates where it is required to remove only 10 to 50 nm from the initial surface.

The etching compositions of Examples 6 and 7 are especially favorable, as they do not contain any toxic components, as $HBF_4$ is used as de-oxidant.

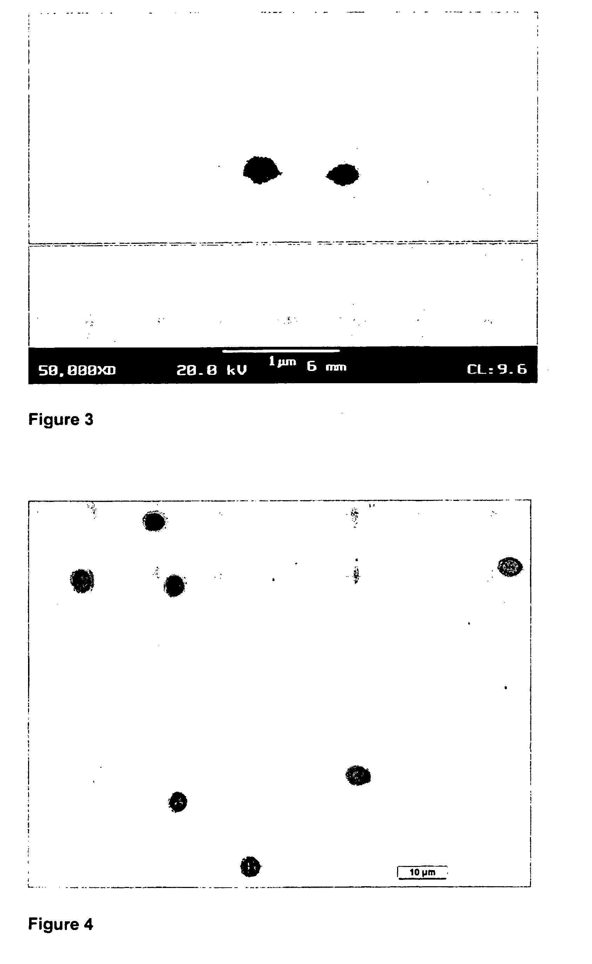

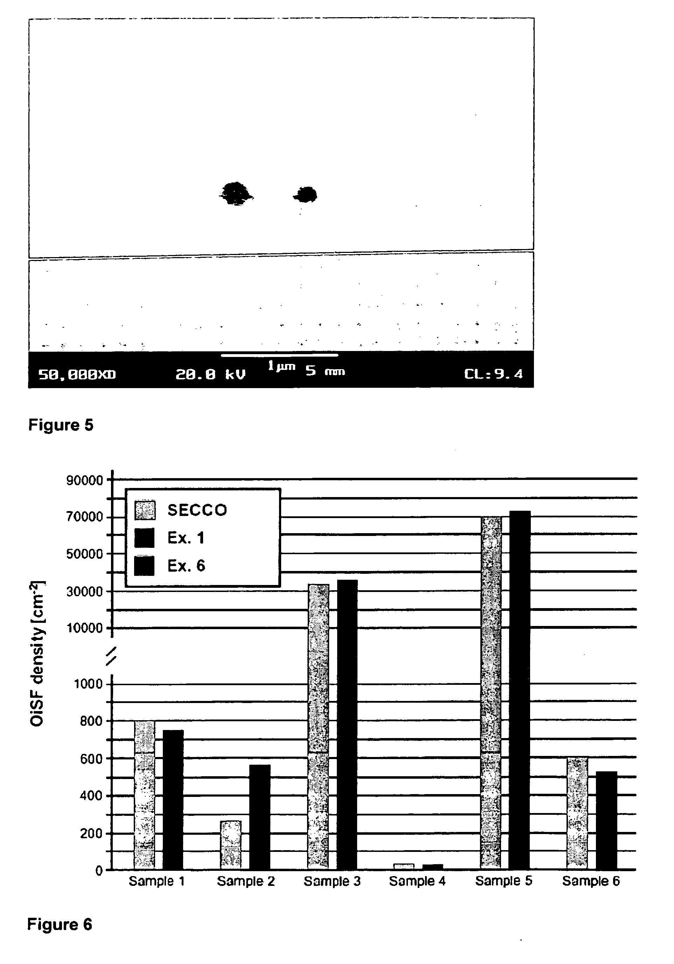

The etching composition of Example 6 was used within a method for detecting etch features of oxidation-induced stacking faults on an SOI silicon surface. Figure 2 displays the etch features obtained after etching by optical microscopy (Reichert-UNIVAR microscope with Nomarski contrast) and Figure 3 by scanning electron microscopy using an AMRAY 1920 ECO-SEM. In addition, an analogous experiment was performed with the SECCO etching solution (Figures 4 and 5).

Figures 2/3 and 4/5 demonstrate that it is possible to use the etching solution in accordance with the present invention within an industrial etching process in replacement of the reference SECCO solution.

Figure 6 proves a very good correlation in the number of revealed OiSFs between etching compositions in accordance with the present invention (Example 1 and Example 6) and the prior art (SECCO). The results clearly show that the etching composition in accordance with the present invention, despite not containing the chromium-containing component reported to be essential in the prior art, shows highly satisfying and reliable results, comparable to the results as achieved with the prior art SECCO composition. The shape of revealed etch pits are either conic shallow pits and observable as round mark (spot) after etching treatment, either linear oval-shaped defects or stacking faults (observable as lines after etching). Overall, it is possible to reveal defects in semiconductor substrates on surfaces, even in thin substrates, such as SOI or sSOI substrates with an etching solution in accordance with the present invention.

Furthermore, the inventors found that various defects, including dislocations and stacking faults can be revealed not only on conventional silicon surfaces but also on strained and stressed surfaces, such as strained SOI layers or stressed Si layers grown on top of SiGe layers, being stressed due to the percentage of the germanium content in the underlying layer. The present invention provides highly satisfying results, accordingly, not only on conventional silicon surfaces but also on those specific types of silicon surfaces.

Overall, the use of the etching composition in accordance with the present invention enables a superior control of the etch rate together with highly satisfying etch results, i.e. highly reliable detection of defects on a treated surface.

It is therefore readily apparent that the etching composition in accordance with the present invention enables a vast improvement compared with the etching compositions as known so far from the prior art.

**Claims**

1. Etching composition, comprising an organic oxidant dissolved in a solvent, and a de-oxidant, wherein the de-oxidant consists of HF or $HBF_4$ or mixtures thereof, wherein the organic oxidant is benzoquinone or a benzoquinone derivative, and wherein the volumic ratio of the solution of the organic oxidant and the de-oxidant is 1 : 0.01 to 1 : 2, preferably 1 : 0.1 to 1 : 0.5.

2. Etching composition according to claim 1, wherein the organic oxidant is p-benzoquinone, 3,5-di-tert-butyl-o-benzoquinone, 2,5-di-tert-butyl-p-benzoquinone, 2,3-dicyano-5,6-dichloro-p-benzoquinone or 2,3,5,6-tetrachloro-p-benzoquinone.

3. Etching composition according to any of the preceding claims, wherein the solvent is an organic solvent.

4. Etching composition according to claim 3, wherein the solvent comprises acetone, acetic acid, acetonitrile, benzonitrile, dimethylformamide, dimethylsulfoxide, dioxane, ethanol, formic acid, methyl acetate, N-methyl-2-pyrrolidone, propanoic acid, propanol, tetrahydrofurane, toluene or mixtures thereof, preferably acetonitrile or dioxane.

5. Etching composition according to any of the preceding claims, wherein the concentration of the organic oxidant in the solvent is from 0.1 to 100 g/), preferably from 1 to 30 g/l.

6. Method for characterizing defects on silicon surfaces, comprising the steps of

   a) providing a silicon surface,
   b) treating the silicon surface with an etching composition comprising an organic oxidant dissolved in a solvent, and a de-oxidant, wherein the de-oxidant comprises HF or $HBF_4$ or mixtures thereof, and
   c) detecting surface defects on the treated surface with a suitable detecting method.

7. Method according to claim 6, wherein the silicon surface is a SOI or sSOI substrate.

8. Method according to any of claims 6 or 7, wherein the etch rate is from 0.2 to 50 nm/min, preferably from 2 to 50 nm/min at 23°C.

9. Method according to any of claims 6 to 8, wherein the variability of the etch rate is 0.1 nm/min or less.

10. Method according to any of claims 6 to 9, further comprising the step of visually evaluating the treated silicon surface.

11. Process for etching silicon surfaces, comprising the step of treating the silicon surface with an etching composition according to any of claims 1 to 5.

12. Use of an etching composition according to any of the claims 1 to 5 within a method according to any of claims 6 to 10.


**Patentansprüche**

1. Ätzzusammensetzung, umfassend ein organisches Oxidationsmittel aufgelöst in einem Lösungsmittel, und ein Deoxidationsmittel, wobei das Deoxidationsmittel aus HF oder $HBF_4$ oder Mischungen dieser besteht, wobei das organische Oxidationsmittel Benzochinon oder ein Benzochinonderivat ist, und wobei das Volumenverhältnis der Lösung des organischen Oxidationsmittels und des Deoxidationsmittels 1 : 0,01 bis 1 : 2, vorzugsweise 1 : 0,1 bis 1 : 0,5 beträgt.

2. Ätzzusammensetzung nach Anspruch 1, wobei das organische Oxidationsmittel p-Benzochinon, 3,5-Di-tert-butyl-o-benzochinon, 2,5-Di-tert-butyl-p-benzochinon, 2,3-Dicyano-5,6-dichlor-p-benzochinon oder 2,3,5,6-Tetrachlor-p-benzochinon ist.

3. Ätzzusammensetzung nach einem der vorangehenden Ansprüche, wobei das Lösungsmittel ein organisches Lösungsmittel ist.

4. Ätzzusammensetzung nach Anspruch 3, wobei das Lösungsmittel Aceton, Essigsäure, Acetonitril, Benzonitril, Dimethylformamid, Dimethylsulfoxid, Dioxan, Ethanol, Ameisensäuresäure, Methylacetat, N-Methyl-2-pyrrolidon, Propionsäure, Propanol, Tetrahydrofuran, Toluol oder deren Mischungen umfasst, vorzugsweise Acetonitril oder Dioxan.

5. Ätzzusammensetzung nach einem der vorangehenden Ansprüche, wobei die Konzentration des organischen Oxidationsmittels in dem Lösungsmittel von 0,1 bis 100 g/l beträgt, vorzugsweise von 1 bis 30 g/l.

6. Verfahren zur Charakterisierung von Defekten auf Siliziumoberflächen, umfassend die Schritte

   a) Bereitstellen einer Siliziumoberfläche,
   b) Behandeln der Siliziumoberfläche mit einer Ätzzusammensetzung umfassend ein organisches Oxidationsmittel aufgelöst in einem Lösungsmittel, und ein Deoxidationsmittel, wobei das Deoxidationsmittel HF oder $HBF_4$ oder deren Mischungen umfasst, und
   c) Ermitteln von Oberflächendefekten auf der behandelten Oberfläche mit einem geeigneten Detektierverfahren.

7. Verfahren nach Anspruch 6, wobei die Siliziumoberfläche ein SOI- oder sSOI-Substrat ist.

8. Verfahren nach einem der Ansprüche 6 oder 7, wobei die Ätzrate von 0,2 bis 50 nm/min beträgt, vorzugsweise von 2 bis 50 nm/min bei 23°C.

9. Verfahren nach einem der Ansprüche 6 bis 8, wobei die Variabilität der Ätzrate 0,1 nm/min oder weniger beträgt.

10. Verfahren nach einem der Ansprüche 6 bis 9, des Weiteren umfassend den Schritt des optischen Überprüfens der behandelten Siliziumoberfläche.

11. Verfahren zum Ätzen von Siliziumobertlächen, umfassend den Schritt des Behandelns der Siliziumoberfläche mit einer Ätzzusammensetzung nach einem der Ansprüche 1 bis 5.

12. Verwendung einer Ätzzusammensetzung nach einem der Ansprüche 1 bis 5 in einem Verfahren gemäß einem der Ansprüche 6 bis 10.

**Revendications**

1. Composition d'attaque chimique, comprenant un oxydant organique dissous dans un solvant, et un désoxydant, le désoxydant consistant en HF ou $HBF_4$ ou des mélanges de ceux-ci, l'oxydant organique étant une benzoquinone ou un dérivé de benzoquinone, et le rapport volumique de la solution de l'oxydant organique au désoxydant étant de 1:0,01 à 1:2, de préférence de 1:0,1 à 1:0,5.

2. Composition d'attaque chimique selon la revendication 1, l'oxydant organique étant la p-benzoquinone, la 3,5-di-tert-butyl-o-benzoquinone, la 2,5-di-tert-butyl-p-benzoquinone, la 2,3-dicyano-5,6-dichloro-p-benzoquinone ou la 2,3,5,6-tétrachloro-p-benzoquinone.

3. Composition d'attaque chimique selon n'importe lesquelles des revendications précédentes, le solvant étant un solvant organique.

4. Composition d'attaque chimique selon la revendication 3, le solvant comprenant de l'acétone, de l'acide acétique, de l'acétonitrile, du benzonitrile, du diméthylformamide, du diméthylsulfoxyde, du dioxane, de l'éthanol, de l'acide formique, de l'acétate de méthyle, de la N-méthyl-2-pyrrolidone, de l'acide propanoïque, du propanol, du tétrahydrofurane, du toluène ou leurs mélanges, de préférence de l'acétonitrile ou du dioxane.

5. Composition d'attaque chimique selon n'importe lesquelles des revendications précédentes, la concentration de l'oxydant organique dans le solvant étant comprise entre 0,1 et 100 g/l, de préférence entre 1 et 30 g/l.

6. Procédé de caractérisation de défauts sur des surfaces en silicium, comprenant les étapes consistant à

a) se procurer une surface en silicium,
b) traiter la surface en silicium avec une composition d'attaque chimique comprenant un oxydant organique dissous dans un solvant, et un désoxydant, le désoxydant comprenant HF ou $HBF_4$ ou des mélanges de ceux-ci, et
c) détecter des défauts superficiels sur la surface traitée avec un procédé de détection approprié.

7. Procédé selon la revendication 6, dans lequel la surface en silicium est un silicium sur isolant (SOI) ou un substrat de silicium contraint sur isolant (substrat sSOI).

8. Procédé selon n'importe lesquelles des revendications 6 ou 7, dans lequel la vitesse d'attaque chimique est comprise entre 0,2 et 50 nm/min, de préférence entre 2 et 50 nm/min à 23 °C.

9. Procédé selon n'importe lesquelles des revendications 6 à 8, dans lequel la variabilité de la vitesse d'attaque chimique est de 0,1 nm/min ou moins.

10. Procédé selon n'importe lesquelles des revendications 6 à 9, comprenant en outre l'étape d'évaluation visuelle de la surface en silicium traitée.

11. Procédé d'attaque chimique de surfaces en silicium, comprenant l'étape de traitement de la surface en silicium avec une composition d'attaque chimique selon n'importe lesquelles des revendications 1 à 5.

**12.** Utilisation d'une composition d'attaque chimique selon n'importe lesquelles des revendications 1 à 5 dans un procédé selon n'importe lesquelles des revendications 6 à 10.

Figure 1

Figure 2

50.000XO      20.0 kV   1 µm  6 mm          CL:9.6

Figure 3

10 µm

Figure 4

**Figure 5**

**Figure 6**

**REFERENCES CITED IN THE DESCRIPTION**

**Patent documents cited in the description**

- US 2619414 A

**Non-patent literature cited in the description**

- *Journal of Electrochemical Society,* 1972, vol. 119 (7), 948-951
- **L.F.Giles ; A.Nejim ; P.L.F.Hemment.** *Vacuum,* 1992, vol. 43, 297
- *Materials Chemistry and Physics,* 1993, vol. 35, 129-133
- **W.C. Dash.** *Journal of Applied Physics,* 1956, vol. 27 (10), 1193-1195
- **R.E. Moser ; H.G. Cassidy.** *Journal of the American Chemical Society,* 1965, vol. 87 (15), 3463-3467
- **I. Ohlidal ; D. Franta.** Ellipsometry of Thin Film Systems, Progress in Optics. Elsevier, 2000, vol. 41, 181-282